# EUROPEAN PATENT APPLICATION

(11) **EP 1 514 903 A1**
(43) Date of publication of application: **16.03.2005**
(21) Application number: 03733166.7
(22) Date of filing: 29.05.2003
(51) Int. Cl.: C08L 75/08, C08L 57/00, C08L 71/02, C08L 85/00, C08G 18/83, C08G 77/458, C09J 175/08

(54) **CURABLE RESIN COMPOSITION**

(30) Priority: 29.05.2002 JP 2002155469
(71) Applicant: Konishi Co., Ltd., Osaka-shi, Osaka 541-0045 (JP)
(72) Inventor: SATO, Shinichi KONISHI CO., LTD., Urawa Works, Saitama-shi, Saitama 338-0832 (JP); INOUE, Ayako KONISHI CO., LTD., Urawa Works, Saitama-shi, Saitama 338-0832 (JP); MORI, Shigeki KONISHI CO., LTD., Urawa Works, Osaka-shi, Osaka 538-0053 (JP); NOMURA, Yukihiro KONISHI CO., LTD., Urawa Works, Saitama-shi, Saitama 338-0832 (JP)
(74) Representative: Grünecker, Kinkeldey, Stockmair & Schwanhäusser
(86) International application number: PCT/JP2003/006773
(87) International publication number: WO 2003/099929

(57) **Abstract**

There is provided a composition comprising a sililated urethane resin having a polyoxyalkylene polymer as its main chain, having a reactive silicon group at a terminal of the molecule and having a substituted urea bond in the molecule, a diluent (B) having a boiling point of not lower than 250°C and a curing catalyst (C), wherein the curing catalyst (C) is a reaction product of a poly(dialkylstannoxane) dicarboxylate represented by the following general formula (1) and a silicate compound represented by the general formula R³ₙSi(OR⁴)₄₋ₙ (2).

## Description

### Technical Field

The present invention relates to a curable resin composition suitable for applications such as an adhesive, a sealant and a paint which are environmentally-friendly.

### Background Art

As curing catalysts for polymers each having a hydrolyzable silicon group, there are generally titanic ester compounds, tin carboxylate compounds, amines and the like. Dialkyl tin compounds are mainly used.

However, these curing catalysts have a low cure rate. Thus, it has been proposed to use, as a curing catalyst, a reaction product of a dialkyl tin oxide or a carboxylate and an alkoxysilane or an ester compound (Japanese Patent Publication Nos. 38989/1984, 58219/1989 and 22105/1990, Japanese Patent Application Laid-Open No. 57460/1983, Japanese Patent Publication No. 38989/1984 and the like). Use of these organotin compounds provides a higher cure rate than use of the above dialkyl tin compounds, but the cure rate is not satisfactorily high. Hence, the development of catalysts that have a higher cure rate has been desired.

On the other hand, in order to solve problems such as pollution of air in the room, there is demand for environmentally-friendly adhesive and the like which contain no diluent having a boiling point lower than 250°C. However, when a diluent having a boiling point of 250°C or higher is used, the onset of adhesive strength is liable to become noticeably slow. Therefore, it has been very difficult to produce a quick-curing adhesive and the like.

### Disclosure of the Invention

A polyoxyalkylene-type curable resin composition that has a reactive silicon group and is suitable for applications such as an environmentally-friendly adhesive, sealant and paint which harden quickly, has excellent adhesive properties and contains no diluent having a boiling point lower than 250°C has been desired.

The present invention relates to the incorporation of a curing catalyst comprising a reaction product of a poly(dialkylstannoxane) dicarboxylate represented by a specific formula and a silicate compound represented by a specific formula into a specific sililated urethane resin and the use of a specific diluent together with the curing agent.

Further, the present invention also relates to incorporating a vinyl polymer obtained by polymerization of a polymerizable vinyl group-containing monomer so as to attain adhesion to metals and cohesion in particular.

Further, the present invention also relates to incorporating a modified silicone resin so as to attain a low viscosity and good workability.

An embodiment of the present invention is a curable resin composition comprising: 100 parts by weight of a sililated urethane resin (A) having a polyoxyalkylene polymer as its main chain, having a reactive silicon group at a terminal of the molecule and having a substituted urea bond in the molecule; 1 to 50 parts by weight of a diluent (B) having a boiling point of 250°C or more; and 0.1 to 10 parts by weight of a curing catalyst (C), wherein the curing catalyst (C) is a reaction product of a poly(dialkylstannoxane) dicarboxylate represented by the following general formula (1): 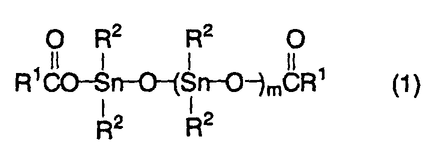 wherein R¹ and R² represent each a substituted or unsubstituted hydrocarbon group having 1 to 12 carbon atoms; m represents 0 or an integer of 1 or more; and R¹ and R² may be the same or different,
and a silicate compound represented by the following general formula (2):

R³ ₙSi(OR⁴)₄₋ₙ (2)

wherein R³ and R⁴ represent each an alkyl group having 1 to 4 carbon atoms or a hydrocarbon group having 1 to 10 carbon atoms; n represents an integer of 0 to 3; R³ and R⁴ may be the same or different; when a plurality of R³s are present, they may be the same or different; and when a plurality of R⁴s are present, they may be the same or different.

As the curing catalyst (C), a poly(dialkylstannoxane) disilicate represented by the following general formula (3) is preferred. In this specification, "poly(dialkylstannoxane)disilicate" means to include not only poly (dialkylstannoxane) disilicate but also dialkylstannoxane disilicate. 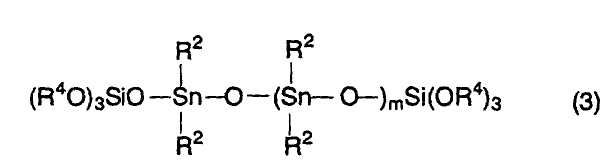 wherein R², R⁴ and m are the same as defined above.

Further, the curable resin composition preferably contains 5 to 500 parts by weight of a vinyl polymer (D) obtained by polymerization of a polymerizable vinyl group-containing monomer based on 100 parts by weight of the sililated urethane resin (A).

Further, the curable resin composition preferably contains 5 to 1,000 parts by weight of a modified silicone resin (E) based on 100 parts by weight of the sililated urethane resin (A).

Further, the curable resin composition may contain 5-1,000 parts by weight of the modified silicone resin(E) based on 100 parts by weight of the sililated urethane resin (A).

Further, the diluent(B) is not particularly restricted if only it has a boiling point of 250 or more, however, preferably it has a molecular weight of 1,000 or less, more preferably 700 or less.

The diluent(B) has a group selected from the group consisting of a hydroxyl, allyl and amino group, preferably.

The curable resin composition of the present embodiment has a high cure rate as well as a very high initial adhesive strength and fully adapts to any environmental problems to a sufficient extent. From the foregoing, the present composition is suitable for applications, such as fixtures, building material for door and system kitchen, interiors of architecture, civil engineering, audio equipment, and assembly of electric devices and equipment. Especially, the present composition is suitable for applications such as an adhesive, a sealant and paint which are used in a sealed, closed place such as a room, a tunnel and a conduit.

The present application relates to Japanese Patent Application No. 155469/2002 filed on May 29, 2002 and incorporates the contents disclosed by the application herein by reference.

### Best Mode for Carrying out the Invention

The sililated urethane resin (A) which is a component of the curable resin composition is a sililated urethane resin having a polyoxyalkylene polymer as its main chain, having a reactive silicon group at a terminal of the molecule and having a substituted urea bond in the molecule. Preferably, the sililated urethane resin (A) has groups represented by the following general formulae (4) and (5) in the molecule. 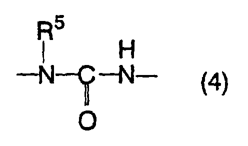 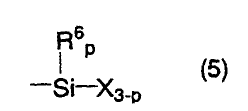 wherein R⁵ represents a group represented by the following general formula (6), (7), (8) or (9), a phenyl group or a substituted or unsubstituted organic group having 1 to 20 carbon atoms; R⁶ represents a substituted or unsubstituted organic group having 1 to 20 carbon atoms; X represents a hydroxyl group or a hydrolyzable group; p represents 0, 1 or 2; when a plurality of R⁶s are present, they may be the same or different; and when a plurality of Xs are present, they may be the same or different. 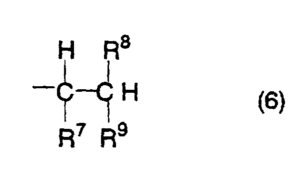 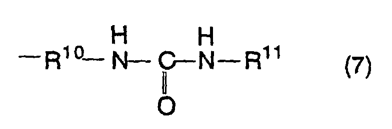 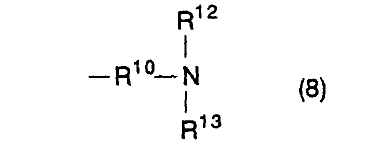 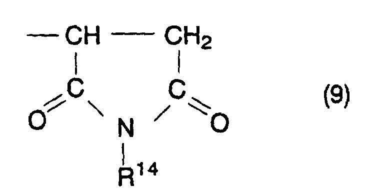 wherein R⁷ represents a hydrogen atom or -COOR¹⁵; R⁸ represents a hydrogen atom or a methyl group; R⁹ represents -COOR¹⁶ or a nitrile group; R¹⁰ represents a substituted or unsubstituted divalent organic group having 1 to 20 carbon atoms; R¹¹ represents an organic group which may contain a silicon atom having a molecular weight of not higher than 500; R¹² and R¹³ represent each a group represented by the above general formula (6) or the following general formula (10) (wherein R¹¹ is the same as defined above); R¹⁴ represents a phenyl group, a cyclohexyl group or a substituted or unsubstituted monovalent organic group having 1 to 20 carbon atoms; R¹² and R¹³ may be the same or different; and R¹⁵ and R¹⁶ represent each an organic group having a molecular weight of not higher than 500.

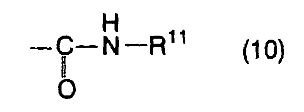

Illustrative examples of the hydrolyzable group represented by X in the above general formula (5) include an alkoxy group, an acetoxy group and an oxime group. The alkoxy group is particularly preferred.

The sililated urethane resin (A) can be produced by reacting a compound (compound (a)) having a polyoxyalkylene polymer as its main chain and at least one group selected from a hydroxyl group, a primary amino group and a secondary amino group with a polyisocyanate compound (compound (b)) so as to produce an urethane prepolymer and then reacting the urethane prepolymer with a compound (compound (c)) represented by the following general formula (11).

The polyoxyalkylene polymer which is a raw material of the compound (a) is preferably a hydroxyl group-terminated polymer produced by reacting an initiator with a monoepoxide or the like in the presence of a catalyst.

As the initiator, a hydroxy compound having at least one hydroxyl group and the like can be used.

Illustrative examples of the monoepoxide include ethylene oxide, propylene oxide, butylene oxide, hexylene oxide, and tetrahydrofuran. These can be used alone or in a combination of two or more.

Illustrative examples of the catalyst include alkali metal catalysts such as a potassium-based compound and a cesium-based compound, a metal complex cyanogen compound complex catalyst, and a metal porphyrin catalyst. As the metal complex cyanogen compound complex catalyst, a complex containing zinc hexacyanocobaltate as a main component and a complex of ether and/or alcohol are preferred. As the composition of the complex of ether and/or alcohol, one described in Japanese Patent Publication No. 27250/1971 can be substantially used. As the ether, ethylene glycol dimethyl ether (glyme), diethylene glycol dimethyl ether (diglyme) and the like are preferred. Glyme is particularly preferred from the viewpoint of handling at the time of production of the complex. Illustrative examples of the alcohol include those described in Japanese Patent Application Laid-Open No. 145123/1992. Particularly preferred is t-butanol.

The above raw material polyoxyalkylene polymer preferably has a number average molecular weight of 500 to 30,000, particularly preferably 2,000 to 20,000. The raw material polyoxyalkylene polymer preferably has two or more functional groups. Specific examples thereof include a polyoxyethylene, a polyoxypropylene, a polyoxybutylene, a polyoxyhexylene and a polyoxytetramethylene. Preferred raw material polyoxyalkylene polymers are divalent to hexavalent polyoxyethylene polyols and polyoxypropylene polyols. Particularly, a polyoxyethylene diol is preferred as the polyoxyethylene polyol. As the polyoxypropylene polyols, a polyoxypropylene diol and a polyoxypropylene triol are preferred.

The compound (a) is commercially available, and its commercial products can be used in the present invention. Illustrative examples of commercial products thereof include ADEKA POLYETHER P-2000, ADEKA POLYETHER P-3000 and ADEKA POLYETHER PR-5007 of ASAHI DENKA CO., LTD.; PML-3005, PML-3010, PML-3012, PML-4002, PML-4010 and PML-5005 of ASAHI GLASS CO., LTD.; Sumiphen 3700 and SBU-Polyol 0319 of SUMITOMO BAYER URETHANE CO., LTD.; and ACTCALL P-28 of MITSUI TAKEDA CHEMICAL INDUSTRIES, INC. Further, the compound (a) may be obtained by reacting a polyoxypropylene having a primary amino group at a terminal (for example, JEFFERMINE D-230, D-400 and D-2000 of Sun Technochemicals Co., Ltd.) or a polyoxypropylene having a secondary amino group at a terminal (for example, JEFFERMINE D-230, D-400 and D-2000 of Sun Technochemicals Co., Ltd.) with one or two or more compounds selected from an α,β-unsaturated carbonyl compound, maleic diester and acrylonitrile.

Illustrative examples of the compound (b) include a diisocyanate compound and polyisocyanate compounds other than the diisocyanate compound. Illustrative examples of the diisocyanate compound include aliphatic, alicyclic, araliphatic and aromatic diisocyanate compounds. Specific examples of the aliphatic diisocyanate compounds include trimethylene diisocyanate, tetramethylene diisocyanate, pentamethylene diisocyanate, 1,2-propylene diisocyanate, 1,2-butylene diisocyanate, 2,3-butylene diisocyanate, 1,3-butylene diisocyanate, 2,4,4- or 2,2,4-trimethylhexamethylene diisocyanate, and 2,6-diisocyanatemethyl caproate. Specific examples of the alicyclic diisocyanate compounds include 1,3-cyclopentene diisocyanate, 1,4-cyclohexane diisocyanate, 1,3-cyclohexane diisocyanate, 3-isocyanatemethyl-3,5,5-trimethylcyclohexyl isocyanate, 4,4'-methylenebis(cyclohexylisocyanate), methyl-2,4-cyclohexane diisocyanate, methyl-2,6-cyclohexane diisocyanate, 1,3-bis(isocyanatemethyl)cyclohexane, 1,4-bis(isocyanatemethyl)cyclohexane, and isophorone diisocyanate. Specific examples of the araliphatic diisocyanate compounds include 1,3- or 1,4-xylylene diisocyanate or a mixture thereof, ω,ω'-diisocyanate-1,4-diethylbenzene, and 1,3- or 1,4-bis(1-isocyanate-1-methylethyl)benzene or a mixture thereof. Specific examples of the aromatic diisocyanate compounds include m-phenylene diisocyanate, p-phenylene diisocyanate, 4,4'-diphenyl diisocyanate, 1,5-naphthalene diisocyanate, 4,4'-diphenylmethane diisocyanate, 2,4- or 2,6-tolylene diisocyanate, 4,4'-toluidine diisocyanate, and 4,4'-diphenyl ether diisocyanate.

Illustrative examples of the polyisocyanate compounds other than the isocyanate compound include aliphatic, alicyclic, araliphatic and aromatic polyisocyanate compounds. Specific examples of the aliphatic polyisocyanate compounds include lysine ester triisocyanate, 1,4,8-triisocyanate octane, 1,6,11-triisocyanate undecane, 1,8-diisocyanate-4-isocyanate methyloctane, 1,3,6-triisocyanate hexane, 2,5,7-trimethyl-1,8-diisocyanate-5-isocyanate methyloctane. Specific examples of the alicyclic polyisocyanate compounds include 1,3,5-triisocyanate cyclohexane, 1,3,5-trimethylisocyanate cyclohexane, 3-isocyanate-3,3,5-trimethylcyclohexyl isocyanate, 2-(3-isocyanatepropyl)-2,5-di(isocyanatemethyl)-bicyclo [2.2.1]heptane, 2-(3-isocyanatepropyl)-2,6-di(isocyanatemethyl)-bicyclo [2.2.1]heptane, 5-(2-isocyanateethyl)-2-isocyantemethyl-3-(3- isocyanatepropyl)-bicyclo[2.2.1]heptane, 6-(2-isocyanateethyl)-2-isocyanatemethyl-3-(3- isocyanatepropyl)-bicyclo[2.2.1]heptane, 5-(2-isocyanateethyl)-2-isocyanatemethyl-2-(3- isocyanatepropyl)-bicyclo[2.2.1]heptane, and 6-(2-isocyanateethyl)-2-(3-isocyanatepropyl)-bicyclo[2.2.1] heptane. Specific examples of the araliphatic polyisocyanate compounds include 1,3,5-triisocyanate methylbenzene. Specific examples of the aromatic polyisocyanate compounds include triphenylmethane-4,4',4"-triisocyanate, 1,3,5-triisocyanate benzene, 2,4,6-triisocyanate toluene, and 4,4'-diphenylmethane-2,2',5,5'-tetraisocyanate. Specific examples of other polyisocyanate compounds include diisocyanates containing sulfur atoms such as phenyl diisothiocyanate.

The compound (c) is a compound represented by the following general formula (11): 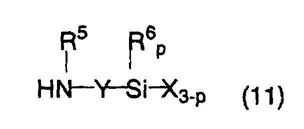 wherein R⁵, R⁶, X and p are the same as defined above; and Y represents a substituted or unsubstituted divalent organic group having 1 to 20 carbon atoms, a group represented by the following general formula (12) or a group represented by the following general formula (13), 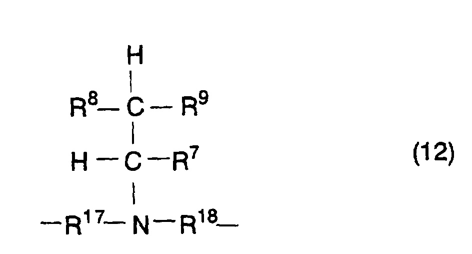 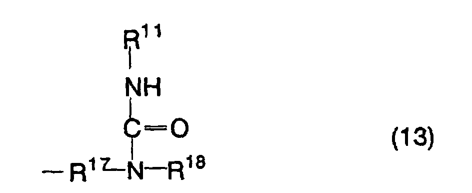 wherein R⁷, R⁸, R⁹ and R¹¹ are the same as defined above; and R¹⁷ and R¹⁸ represent each a substituted or unsubstituted divalent organic group having 1 to 10 carbon atoms.

Specific examples of the compound (c) include N-phenyl-γ-aminopropyltrimethoxysilane, N-phenyl-γ-aminopropylmethyldimethoxysilane, N-(n-butyl)-γ-aminopropyltrimethoxysilane, N-(n-butyl)-γ-aminopropylmethyldimethoxysilane, N-ethylaminoisobutyltrimethoxysilane, N-methylaminopropylmethyldimethoxysilane, N-methylaminopropyltrimethoxysilane, and bis(trimethoxysilylpropyl)amine. Alternatively, the compound (c) can be produced in accordance with the following methods.
(i) Compound Wherein R⁵ Is Represented By The Above General Formula (6) and Y Is a Divalent Organic Group
   A method comprising reacting a compound (compound (d)) having one primary amino group and one hydrolyzable group-containing silicon group or hydroxyl group-containing silicon group (preferably a hydrolyzable group-containing silicon group) with at least one compound which is chemically equivalent to the group and selected from an α,β-unsaturated carbonyl compound (compound (e)), maleic diester (compound (f)) and acrylonitrile.
(ii) Compound Wherein R⁵ Is Represented By The Above General Formula (6) and Y Is Represented By The Above General Formula (12)
   A method comprising reacting a compound (compound (g)) having one primary amino group, one secondary amino group, and one hydrolyzable group-containing silicon group or hydroxyl group-containing silicon group (preferably a hydrolyzable group-containing silicon group) with at least one compound which is chemically equivalent to the primary and secondary amino groups in the compound (g) and selected from the compound (e), the compound (f) and acrylonitrile.
(iii) Compound Wherein R⁵ Is Represented By The Above General Formula (6) and Y Is Represented By The Above General Formula (13)
   A method comprising the steps of reacting the compound (g) with at least one compound which is chemically equivalent to the primary amino group in the compound (g) and selected from the compound (e), the compound (f) and acrylonitrile and then reacting the resulting product with a monoisocyanate compound (compound (h)) which is chemically equivalent to the secondary amino group in the compound (g) and represented by the formula R¹¹NCO (wherein R¹¹ is the same as defined above).
(iv) Compound (g) Wherein R⁵ Is Represented By The Above General Formula (7) and Y Is A Divalent Organic Group
   A method comprising reacting the compound (g) with the compound (h) which is chemically equivalent to the primary amino group in the compound (g).
(v) Compound Wherein R⁵ Is Represented By The Above General Formula (8), R¹² and R¹³ in The General Formula (8) Are Represented By The Above General Formula (6), and Y Is A Divalent Organic Group
   A method comprising reacting the compound (g) with at least one compound which is chemically twofold equivalent to the primary amino group in the compound (g) and selected from the compound (e), the compound (g) and acrylonitrile.
(vi) Compound Wherein R⁵ Is Represented By The Above General Formula (8), R¹² in The General Formula (8) Is Represented By The Above General Formula (6), R¹³ in The General Formula (8) Is Represented By The Above General Formula (10), and Y Is A Divalent Organic Group
   A method comprising the steps of reacting the compound (g) with at least one compound which is chemically equivalent to the primary amino group in the compound (g) and selected from the compound (e), the compound (f) and acrylonitrile and then reacting the resulting product with the compound (h) which is chemically equivalent to the secondary amino group resulting from the above reaction.
(vii) Compound Wherein R⁵ Is Represented By The Above General Formula (11) and Y Is A Divalent Organic Group
   A method comprising reacting the compound (d) with a maleimide compound (i) which is chemically equivalent to the primary amino group in the compound (d).

Specific examples of the compound (d) include γ-aminopropyltrimethoxysilane, γ-aminopropyltriethoxysilane, γ-aminopropylmethyldimethoxysilane, γ-aminopropylmethyldiethoxysilane, and aminophenyltrimethoxysilane.

Illustrative examples of the compound (e) include (meth)acryl compounds, a vinyl ketone compound, a vinyl aldehyde compound, and other compounds. Specific examples of the (meth)acryl compounds include methyl (meth)acrylate, ethyl (meth)acrylate, propyl (meth)acrylate, isopropyl (meth)acrylate, butyl (meth)acrylate, isobutyl (meth)acrylate, t-butyl (meth)acrylate, pentyl (meth)acrylate, amyl (meth)acrylate, isoamyl (meth)acrylate, hexyl (meth)acrylate, heptyl (meth)acrylate, octyl (meth)acrylate, 2-ethylhexyl acrylate, nonyl (meth)acrylate, decyl (meth)acrylate, isodecyl (meth)acrylate, undecyl (meth)acrylate, dodecyl (meth)acrylate, lauryl (meth)acrylate, octadecyl (meth)acrylate, stearyl (meth)acrylate, tetrahydrofurfuryl (meth)acrylate, butoxyethyl (meth)acrylate, ethoxydiethylene glycol (meth)acrylate, benzyl (meth)acrylate, cyclohexyl (meth)acrylate, phenoxyethyl (meth)acrylate, polyethylene glycol (meth)acrylate, polypropylene glycol (meth)acrylate, methoxyethylene glycol (meth)acrylate, ethoxyethylene glycol (meth)acrylate, methoxypolyethylene glycol (meth)acrylate, methoxypolypropylene glycol (meth)acrylate, dicyclopentadienyl (meth)acrylate, dicyclopentanyl (meth)acrylate, dicyclopentenyl (meth)acrylate, tricyclodecanyl (meth)acrylate, bornyl (meth)acrylate, isobornyl (meth)acrylate, diacetone (meth)acrylate, isobutoxymethyl (meth)acrylate, N-vinylpyrrolidone, N-vinylcaprolactam, N-vinylformaldehyde, N,N-dimethylacrylamide, t-octylacrylamide, dimethylaminoethyl (meth)acrylate, diethylaminoethyl (meth)acrylate, 7-amino-3,7-dimethyloctyl (meth)acrylate, N,N-dimethyl (meth)acrylamide, N,N'-dimethylaminopropyl (meth)acrylamide and acryloyl morpholine as well as ARONIX M-102, M-111, M-114 and M-117 of TOAGOSEI CO., LTD., KAYAHARD TC110S, R629 and R644 of NIPPON KAYAKU CO., LTD. and BISCOAT 3700 of

### OSAKA ORGANIC CHEMICAL INDUSTRY LTD.

Further, illustrative examples of the (meth)acryl compounds include multifunctional compounds such as trimethylolpropane tri(meth)acrylate, pentaerythritol (meth)acrylate, pentaerythritol tetra(meth)acrylate, ethylene glycol di(meth)acrylate, tetraethylene glycol di(meth)acrylate, polyethylene glycol di(meth)acrylate, 1,4-butanediol di(meth)acrylate, 1,6-hexanediol di(meth)acrylate, neopentyl glycol di(meth)acrylate, trimethylolpropanetrioxyethyl (meth)acrylate, tris(2-hydroxyethyl)isocyanurate tri(meth)acrylate, tris(2-hydroxyethyl)isocyanurate di(meth)acrylate, tricyclodecanedimethanol di(meth)acrylate and epoxy (meth)acrylate resulting from the addition of (meth)acrylate to the glycidyl ether of bisphenol A, as well as YUPIMER UV, SA 1002 and SA2007 of MITSUBISHI CHEMICAL CORPORATION, BISCOAT 700 of OSAKA ORGANIC CHEMICAL INDUSTRY LTD., KAYAHARD R604, DPCA-20, DPCA-30, DPCA-60, DPCA-120, HX-620, D-310 and D-330 of NIPPON KAYAKU CO., LTD. and ARONIX M-210, M-215, M-315 and M-325 of TOAGOSEI CO., LTD. as commercial products of the above multifunctional compounds.

In addition to the above compounds, compounds having an alkoxysilyl group such as γ-methacryloxypropyltrimethoxysilane, γ-methacryloxypropyltriethoxysilane, γ-methacryloxymethyldimethoxysilane, γ-methacryloxymethyldiethoxysilane, γ-acryloxypropyltrimethoxysilane and γ-acryloxymethyldimethoxysilane can be named.

Specific examples of the vinyl ketone compound include vinyl acetone, vinyl ethyl ketone, and vinyl butyl ketone.

Specific examples of the vinyl aldehyde compound include acrolein, methacrolein, and crotonaldehyde. Specific examples of the other compounds include maleic anhydride, itaconic anhydride, itaconic acid, crotonic acid, N-methylolacrylamide, diacetone acrylamide, N-[3-(dimethylamino)propyl]methacrylamide, N,N-dimethylacrylamide, N,N-diethylacrylamide, N-t-octylacrylamide, and N-isopropylacrylamide.

In addition to the above compounds, examples of the compound (e) include compounds containing a fluorine atom, a sulfur atom or a phosphorus atom. Specific examples of the compound containing a fluorine atom include perfluorooctylethyl (meth)acrylate, and trifluoroethyl (meth)acrylate. Specific examples of the compound containing a phosphorus atom include (meth)acryloxyethylphenyl acid phosphate.

Of the above compounds (e), methyl acrylate, ethyl acrylate, propyl acrylate, butyl acrylate, t-butyl acrylate, octyl acrylate, 2-ethylhexyl acrylate, lauryl acrylate and the like are preferred because they react easily and are commercially and easily available in a wide area. Of these, methyl acrylate and ethyl acrylate are particularly preferred for imparting quick-curability. For imparting flexibility, 2-ethylhexyl acrylate and lauryl acrylate are particularly preferred. The compounds (e) can be used alone or in a combination of two or more.

Specific examples of the compound (f) (maleic diester) include dimethyl maleate, diethyl maleate, dibutyl maleate, di-2-ethylhexyl maleate, and dioctyl maleate. These can be used alone or in a combination of two or more. Of these, dimethyl maleate, diethyl maleate, dibutyl maleate and di-2-ethylhexyl maleate are preferred because they react easily and are commercially and easily available in a wide area. The compounds (f) can be used alone or in a combination of two or more.

Specific examples of the compound (g) include N-β(aminoethyl)-γ-aminopropyltrimethoxysilane, N-β(aminoethyl)-γ-aminopropyltriethoxysilane, N-β(aminoethyl)-γ-aminopropylmethyldimethoxysilane, N-β(aminoethyl)-γ-aminopropylmethyldiethoxysilane, N-3-[amino(dipropyleneoxy)]aminopropyltrimethoxysilane, (aminoethylaminomethyl)phenethyltrimethoxysilane, N-(6-aminohexyl)aminopropyltrimethoxysilane and N-(2-aminoethyl)-11-aminoundecyltrimethoxysilane, as well as KBM6063, X-12-896, KBM576, X-12-565, X-12-580, X-12-5263, KBM6123, X-12-575, X-12-562, X-12-5202, X-12-5204 and KBE9703 which are special aminosilanes manufactured by SHIN ETSU CHEMICAL CO., LTD.

Of the above compounds (g), N-β(aminoethyl)-γ-aminopropyltrimethoxysilane, N-β(aminoethyl)-γ-aminopropyltriethoxysilane and N-β(aminoethyl)-γ-aminopropylmethyldimethoxysilane are preferred because they react easily and are commercially and easily available in a wide area.

Specific examples of the compound (h) include ethyl isocyanate, n-hexyl isocyanate, n-dodecyl isocyanate, p-toluenesulfonyl isocyanate, n-hexyl isocyanate, benzyl isocyanate and 2-methoxyphenyl isocyanate, as well as isocyanate silanes such as KBE9007 (γ-isocyanatepropyltriethoxysilane) of SHIN ETSU CHEMICAL CO., LTD.

Specific examples of the compound (i) include N-phenylmaleimide, N-cyclohexylmaleimide, hydroxyphenylmaleimide, N-laurylmaleimide, diethylphenylmaleimide and N-(2-chlorophenyl)maleimide.

The urethane prepolymer can be produced by reacting the above compound (a) with the above compound (b) in accordance with an ordinary method in which a polyol compound is reacted with a polyisocyanate compound so as to produce an urethane prepolymer. Further, to produce the sililated urethane resin (A), the above compound (c) is reacted with the urethane prepolymer at 50 to 100°C for 30 minutes to 3 hours.

Illustrative examples of the diluent (B) having a boiling point of not lower than 250°C include a polyether polyol, a polyamine compound and the like which have a boiling point of not lower than 250°C, as well as a polyether polyol, which has one or both ends terminated with an alkyl group or an allyl group.

Specific example of the polyether polyol include ADEKA POLYETHER P-400, P-700 of ASAHI DENKA CO.,LTD., SBU-Polyol 0705 of SUMITOMO BAYER URETHANE CO., LTD.

Specific example of the polyamine compound include JEFFERMINE D-230 and D-400 of Sun Technochemicals., Co., Ltd.

Further, specific examples of the polyether polyol one or both ends terminated with an alkyl group or an allyl group include ADEKA KAPOL M-30, DL-50, AE-550 of ASAHI DENKA CO., LTD., SPX-80 of Sanyo Chemical Industries, Ltd., and HIMOL PM and HISOLVE MPM of TOHO CHEMICAL INDUSTRY CO., LTD.

The molecular weight of diluent (B) is preferably 1,000 or less, more preferably 700 or less. The amount of diluent (B) having a boiling point of 250°C or more is 1 to 50 parts by weight, preferably 3 to 20 parts by weight, based on 100 parts by weight of the sililated urethane resin (A).

The curing catalyst (C) which is a component of the resin curable composition is a reaction product of the poly(dialkylstannoxane) dicarboxylate represented by the above general formula (1) and the silicate compound represented by the above general formula (2). In this specificiation, the "poly(dialkylstannoxane)dicarboxylate" includes dialkylstannoxane dicarboxylate.

Illustrative examples of the substituted or unsubstituted hydrocarbon group having 1 to 12 carbon atoms represented by R¹ and R² in the above general formula (1) include linear or branched linear alkyl groups such as methyl, ethyl, propyl, isopropyl, butyl, isobutyl, s-butyl, t-butyl, pentyl, hexyl, heptyl, octyl, 2-ethylhexyl, decyl and lauryl, and a substituted or unsubstituted phenyl group. m in the general formula (1) is an integer of 1 or larger, preferably an integer of 1 to 3. R¹ and R² may be the same or different.

Specific examples of the poly(dialkylstannoxane) dicarboxylate represented by the general formula (1) include tetraalkyldistannoxane dicarboxylates such as 1,1,3,3-tetramethyl-1,3-bis(acetoxy)distannoxane, 1,1,3,3-tetramethyl-1,3-bis(butyryloxy)distannoxane, 1,1,3,3-tetramethyl-1,3-bis(octanoyloxy)distannoxane, 1,1,3,3-tetramethyl-1,3-bis(2-ethylhexanoyloxy) distannoxane, 1,1,3,3-tetramethyl-1,3-bis(lauroyloxy)distannoxane, 1,1,3,3-tetrabutyl-1,3-bis(acetoxy)distannoxane, 1,1,3,3-tetrabutyl-1,3-bis(butyryloxy)distannoxane, 1,1,3,3-tetrabutyl-1,3-bis(octanoyloxy)distannoxane, 1,1,3,3-tetrabutyl-1,3-bis(2-ethylhexanoyloxy)distannoxane, 1,1,3,3-tetrabutyl-1,3-bis(lauroyloxy)distannoxane, 1,1,3,3-tetraoctyl-1,3-bis(acetoxy)distannoxane, 1,1,3,3-tetraoctyl-1,3-bis(butyryloxy)distannoxane, 1,1,3,3-tetraoctyl-1,3-bis(octanoyloxy)distannoxane, 1,1,3,3-tetraoctyl-1,3-bis(2-ethylhexanoyloxy)distannoxane, 1,1,3,3-tetraoctyl-1,3-bis(lauroyloxy)distannoxane, 1,1,3,3-tetralauryl-1,3-bis(acetoxy)distannoxane, 1,1,3,3-tetralauryl-1,3-bis(butyryloxy)distannoxane, 1,1,3,3-tetralauryl-1,3-bis(octanoyloxy)distannoxane, 1,1,3,3-tetralauryl-1,3-bis(2-ethylhexanoyloxy)distannoxane, and 1,1,3,3-tetralauryl-1,3-bis(lauroyloxy)distannoxane, and hexaalkyltristannoxane dicarboxylates such as 1,1,3,3,5,5-hexamethyl-1,5-bis(acetoxy)tristannoxane, 1,1,3,3,5,5-hexamethyl-1,5-bis(butyryloxy)tristannoxane, 1,1,3,3,5,5-hexamethyl-1,5-bis(octanoyloxy)tristannoxane, 1,1,3,3,5,5-hexamethyl-1,5-bis(2-ethylhexanoyloxy) tristannoxane, 1,1,3,3,5,5-hexamethyl-1,5-bis(lauroyloxy)tristannoxane, 1,1,3,3,5,5-hexabutyl-1,5-bis(acetoxy)tristannoxane, 1,1,3,3,5,5-hexabutyl-1,5-bis(butyryloxy)tristannoxane, 1,1,3,3,5,5-hexabutyl-1,5-bis(octanoyloxy)tristannoxane, 1,1,3,3,5,5-hexabutyl-1,5-bis(2-ethylhexanoyloxy) tristannoxane, 1,1,3,3,5,5-hexabutyl-1,5-bis(lauroyloxy)tristannoxane, 1,1,3,3,5,5-hexalauryl-1,5-bis(acetoxy)tristannoxane, 1,1,3,3,5,5-hexalauryl-1,5-bis(butyryloxy)tristannoxane, 1,1,3,3,5,5-hexalauryl-1,5-bis(octanoyloxy)tristannoxane, 1,1,3,3,5,5-hexalauryl-1,5-bis(2-ethylhexanoyloxy) tristannoxane, and 1,1,3,3,5,5-hexalauryl-1,5-bis(lauroyloxy)tristannoxane. Of these, tetrabutyldiacyloxy distannoxane and tetraoctyldiacyloxy distannoxane are preferred, and a carboxylate having at most 4 carbon atoms is more preferred because a carboxylic ester produced is easy to remove. 1,1,3,3-tetrabutyl-1,3-bis(acetoxy)distannoxane and 1,1,3,3-tetraoctyl-1,3-bis(acetoxy)distannoxane are more preferred.

Illustrative examples of the alkyl group having 1 to 4 carbon atoms represented by R³ and R⁴ in the general formula (2) of the above silicate compound include methyl, ethyl, propyl, isopropyl, butyl, isobutyl, s-butyl and t-butyl. Specific examples of the silicate compound represented by the above general formula (2) include tetraalkoxysilanes such as tetramethoxysilane, tetraethoxysilane, tetrapropoxysilane, tetraisopropoxysilane and tetrabutoxysilane; trialkoxymonoalkylsilanes such as triethoxymethylsilane, triethoxyethylsilane, triethoxypropylsilane, triethoxyisopropylsilane and triethoxybutylsilane; dialkoxydialkylsilanes such as diethoxydimethylsilane, diethoxydiethylsilane, diethoxydipropylsilane, diethoxydiisopropylsilane and diethoxydibutylsilane; and monoalkoxytrialkylsilanes such as ethoxytrimethylsilane, ethoxytriethylsilane, ethoxytripropylsilane, ethoxytriisopropylsilane and ethoxytributylsilane. Hydrolysates of these alkoxysilanes can also be employed. Of these, the tetraalkoxysilanes or hydrolysates thereof are preferred, and tetraethoxysilane is particularly preferred.

A poly(dialkylstannoxane) disilicate compound which is a reaction product of the poly(dialkylstannoxane) dicarboxylate represented by the general formula (1) and the silicate compound represented by the general formula (2) and/or a hydrolysate thereof can be obtained by reacting the compounds with each other at 100 to 130°C for about 1 to 3 hours and removing the produced carboxylic ester under a reduced pressure. The reaction ratio of the compounds is such that at least 1 equivalent of the alkoxy group is reacted with 1 equivalent of the carboxyl group so as to cause the carboxyl group to completely disappear. If the carboxyl group remains, catalytic activity lowers. This reaction can be carried out in the presence or absence of a solvent. In general, it is preferably carried out in the absence of a solvent.

The structure of the product resulting from the above reaction varies depending on, for example, the reaction ratio of the above poly(dialkylstannoxane) dicarboxylate and the above silicate compound and/or hydrolysate thereof. A preferred reaction product is a poly(dialkylstannoxane) disilicate compound represented by the following general formula (14) which is obtained by reacting at least 2 moles, preferably 2 to 6 moles of the above silicate compound with 1 mole of the above poly(dialkylstannoxane) dicarboxylate. 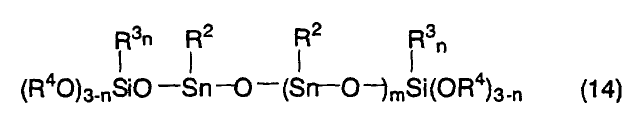 wherein R², R³, R⁴, n and m are the same as defined above.

A more preferable reaction product is a poly(dialkylstannoxane) disilicate compound represented by the following general formula (3) which is obtained by reacting at least 2 moles, preferably 2 to 6 moles of tetraalkoxysilicate compound selected from the above silicate compounds with 1 mole of the above poly(dialkylstannoxane) dicarboxylate. 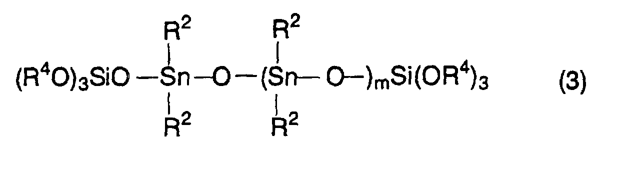 wherein R², R⁴, and m are the same as defined above.

Further, the above reaction product is desirably used in admixture with the silicate compound represented by the general formula (2) and/or hydrolysate thereof with consideration of stability and ease of handling as the curing catalyst. The mixing ratio is such that when the total of the compound and the product is 100 parts by weight, the reaction product comprises 99 to 1 parts by weight, preferably 90 to 50 parts by weight, and the silicate compound and/or hydrolysate thereof comprise(s) 1 to 99 parts by weight, preferably 50 to 90 parts by weight. The silicate compound and/or hydrolysate thereof may be mixed into the reaction product after synthesis. Alternatively, the poly(dialkylstannoxane) dicarboxylate represented by the general formula (1) may be reacted with a highly excessive amount of the silicate compound represented by the general formula (2).

The amount of curing catalyst (C) is 0.1 to 10 parts by weight, preferably 0.3 to 5 parts by weight, based on 100 parts by weight of the sililated urethane resin (A).

It is preferred that a vinyl polymer (D) obtained by polymerization of a polymerizable vinyl monomer be used as another component in the curable composition of the present invention, since the elongation of a cured product improves.

As the polymerizable vinyl monomer, any compound(s) can be selected from the above compounds (e) and used alone or in a combination of two or more.

Particularly, as the polymerizable vinyl monomer, a compound having a reactive silicon group in a molecule and having a bond or atom selected from a thiourethane bond, an urea bond, a substituted urea bond, a nitrogen atom derived from a Michael addition reaction and a sulfur atom derived from a Michael addition reaction is preferably used. Illustrative examples of such a polymerizable vinyl monomer (hereinafter referred to as "compound (j)") include the following compound (j-1) and compound (j-2). Further, these compounds can be produced in accordance with the following synthesis methods. Although the compound (j-1) and the compound (j-2) may be used alone, they are preferably used as a copolymer with the above compound (e), particularly the (meth)acryl compound. For example, it is preferred that the compound (j-1) be copolymerized with the (meth)acryl compound, the compound (j-2) be copolymerized with the (meth)acryl compound, or the compound (j-1) and the compound (j-2) be copolymerized with the (meth)acryl compound.

The compound (j-2) is an unsaturated compound containing a hydrolyzable silicon group. The compound (j-1) is obtained by reacting a monoisocyanate compound having a group represented by the following general formula (15) or (16) and an isocyanate group in the molecule with a compound represented by the following general formula (17), (18), (19), (20), (21), (22), (23) or (24).

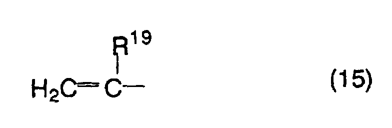

HC≡C- (16)

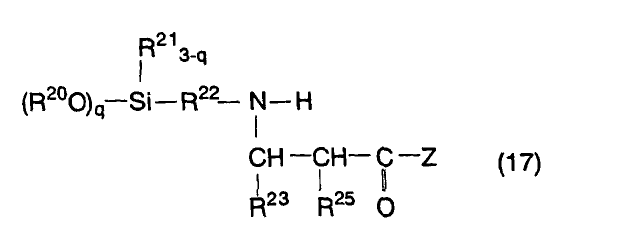

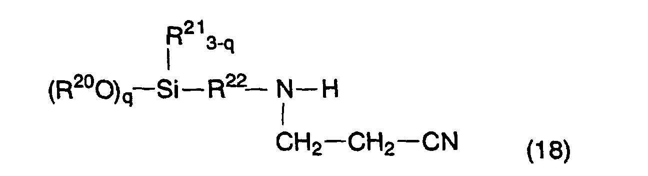

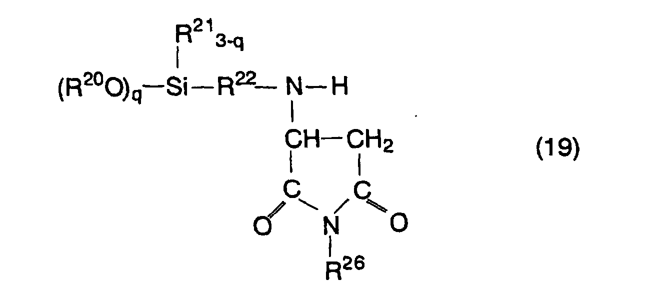

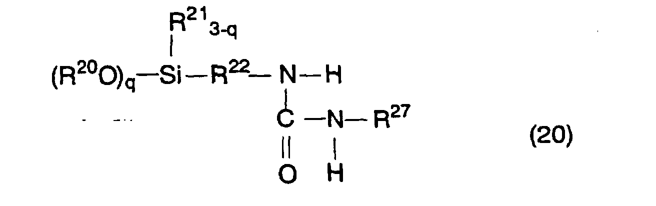

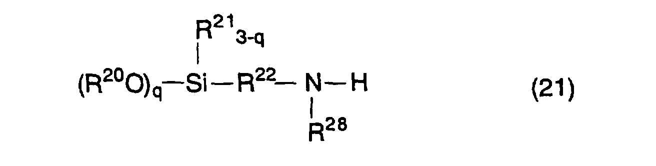

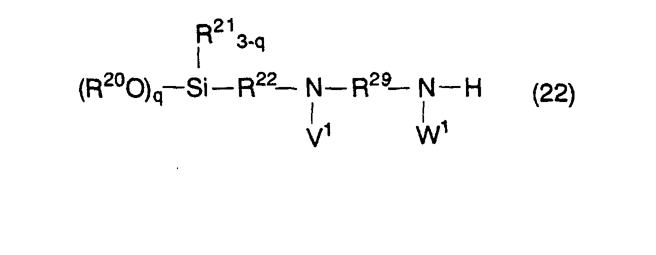

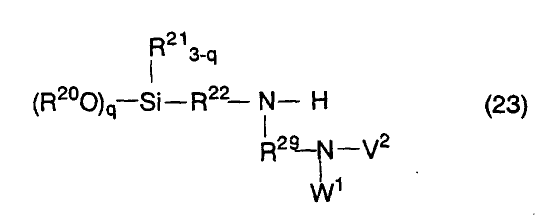

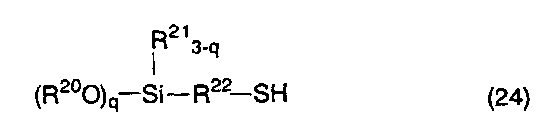

In the above general formula (15), R¹⁹ represents a hydrogen atom or a methyl group. In the above general formulae (17) to (24), R²⁰ represents a hydrogen atom or an alkyl group having 1 to 6 carbon atoms; R²¹ represents a hydrogen atom or an alkyl, aryl or aralkyl group having 1 to 20 carbon atoms; q represents an integer of 1 to 3; R²² represents an alkylene or arylene group which has 1 to 10 carbon atoms and may have side chains; R²³ represents a hydrogen atom or a group represented by the formula -COOR²⁴ (R²⁴ represents an organic group having a molecular weight of 500 or less); R²⁵ represents a hydrogen atom or a methyl group; R²⁶ represents a phenyl group, a cyclohexyl group or a substituted or unsubstituted monovalent organic group having 1 to 20 carbon atoms; R²⁷ represents an alkyl, aryl or aralkyl group having 1 to 20 carbon atoms; R²⁸ represents a hydrogen atom, a phenyl group or a substituted or unsubstituted divalent organic group having 1 to 20 carbon atoms; and R²⁹ represents a substituted or unsubstituted divalent organic group having a molecular weight of 500 or less.

Z represents a hydrogen atom, OR³⁰, R³⁰ or NH². R³⁰ represents a hydrogen atom, an organic group having a molecular weight of not higher than 500 or a group represented by the following general formula (25). 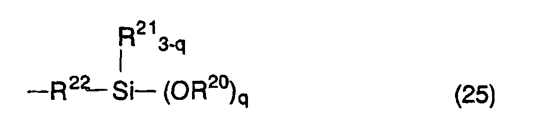 (wherein R²⁰, R²¹ and R²² are the same as defined above, and q represents an integer of 1 to 3.)

V¹, W¹ and V² represent each a group represented by the following general formula (26), (27), (28) or (29). W² represents the general formula (26), (27), (28) or (29) when V² represents the general formula (26); W² represents the general formula (26), (27), (28) or (29) when V² represents the general formula (27); W² represents the general formula (26), (27) or (28) when V² represents the general formula (28); and W² represents a hydrogen atom when V² represents the general formula (29).

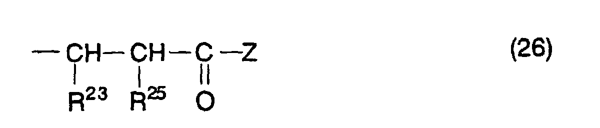

-CH₂-CH₂-CN (27)

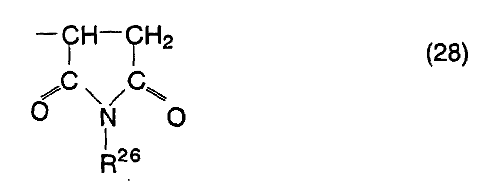

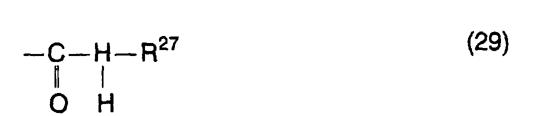

In the above general formulae (26), (27), (28) and (29), R²³, R²⁵, R²⁶ , R²⁷ and Z are the same as defined above.

Specific examples of the monoisocyanate compound having a group represented by the above general formula (15) or (16) and an isocyanate group in the molecule include m-isopropenyl-α,α-dimethylbenzyl isocyanate and 2-methacryloyloxyethyl isocyanate. Commercial products of these compounds can be used.

The compounds represented by the above general formulae (17), (18), (19), (20), (21), (22), (23) and (24) will be described hereinafter.

The compound represented by the above general formula (17) can be produced by reacting a compound represented by the following general formula (30) with a compound represented by the following general formula (31). R²⁰, R²¹, R²² and q in the following general formula (30) and R²³, R²⁵ and Z in the following general formula (31) are the same as defined above. The reaction between the compound represented by the general formula (30) and the compound represented by the general formula (31) is carried out at 20 to 100° C for 1 to 200 hours.

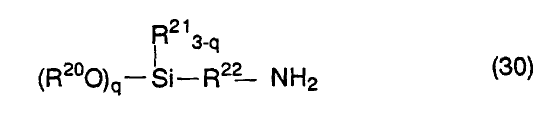

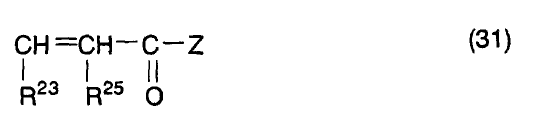

Specific examples of the compound represented by the general formula (30) include γ-aminopropylmethyldimethoxysilane, γ-aminopropylmethyldiethoxysilane, γ-aminopropyltrimethoxysilane, γ-aminopropyltriethoxysilane, and aminophenyltrimethoxysilane.

As the compound represented by the general formula (31), any compound(s) can be selected from the above compounds (e) such as meth(acryl) compounds, a vinyl ketone compound, a vinyl aldehyde compound and other compounds and the above compounds (f) such as maleic diester. The compounds can be used alone or in combination of two or more.

The compound represented by the above general formula (18) can be produced by reacting the compound represented by the above general formula (30) with acrylonitrile. The reaction between the compounds is carried out at 20 to 100°C for 1 to 200 hours.

The compound represented by the above general formula (19) can be produced by reacting the compound represented by the above general formula (30) with a compound represented by the following general formula (32). R²⁶ in the following general formula (32) is the same as defined above. The reaction between the compounds is carried out at 20 to 100°C for 1 to 200 hours.

Specific examples of the compound represented by the general formula (32) include N-phenylmaleimide, N-cyclohexylmaleimide, hydroxyphenylmonomaleimide, N-laurelmaleimide, diethylphenylmonomaleimide, and N-(2-chlorophenyl)maleimide.

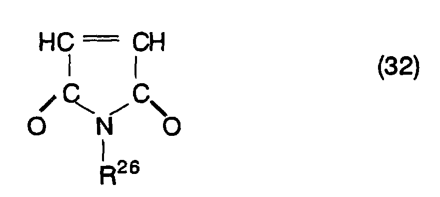

The compound represented by the above general formula (20) can be produced by reacting the compound represented by the above general formula (30) with a monoisocyanate compound represented by the formula R²⁷NCO. R²⁷ in the above formula is the same as defined above. The reaction between the compounds is carried out at 20 to 100°C for 1 to 200 hours. Specific examples of the monoisocyanate compound include ethyl isocyanate, n-hexyl isocyanate, n-decyl isocyanate, p-toluenesulfonyl isocyanate, benzyl isocyanate, and 2-methoxyphenyl isocyanate.

Specific examples of the compound represented by the above general formula (21) include γ-aminopropylmethyldimethoxysilane, γ-aminopropylmethyldiethoxysilane, γ-aminopropyltrimethoxysilane, γ-aminopropyltriethoxysilane, N-phenyl-γ-aminopropyltrimethoxysilane, N-naphthyl-γ-aminopropyltrimethoxysilane, N-(n-butyl)-γ-aminopropyltrimethoxysilane, N-phenyl-γ-aminopropylmethyldimethoxysilane, N-naphthyl-γ-aminopropylmethyldimethoxysilane, N-(n-butyl)-γ-aminopropylmethyldimethoxysilane, N-ethyl-γ-aminoisobutyltrimethoxysilane, N-methyl-γ-aminopropylmethyldimethoxysilane, and N-methyl-γ-aminopropyltrimethoxysilane.

The compounds represented by the above general formulae (22) and (23) can be produced by reacting a compound represented by the following general formula (33) with the compound represented by the above general formula (31), acrylonitrile, the compound represented by the above general formula (32) or the above monoisocyanate compound. The reaction is carried out at 20 to 100°C for 1 to 200 hours.

R²⁰, R²¹, R²² and R²⁹ in the general formula (33) are the same as defined above. Specific examples of the compounds include N-β(aminoethyl)-γ-aminopropyltrimethoxysilane, N-β(aminoethyl)-γ-aminopropylmethyldimethoxysilane, N-β(aminoethyl)-γ-aminopropyltriethoxysilane, N-β(aminoethyl)-γ-aminopropylethyldiethoxysilane, γ-aminopropyldimethylmethoxysilane, (aminoethylaminomethyl)phenethyltrimethoxysilane, N-(6-aminohexyl)-3-aminopropyltrimethoxysilane and N-(2-aminoethyl)-11-aminoundecyltrimethoxysilane. These can be used alone or in a combination of two or more.

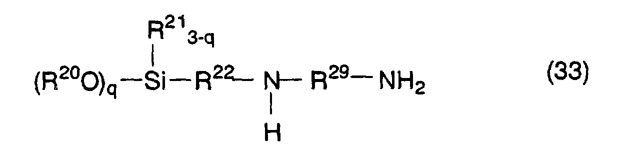

Specific examples of the compound represented by the above general formula (24) include γ-mercaptopropylmethyldimethoxysilane, γ-mercaptopropylmethyldiethoxysilane, γ-mercaptopropyltrimethoxysilane, and γ-mercaptopropyltriethoxysilane.

An example of the reaction (production of a substituted urea bond) between the monoisocyanate compound having a group represented by the above general formula (15) or (16) and an isocyanate group in the molecule and the compound represented by the above general formula (17), (18), (19), (20), (21), (22), (23) or (24) is shown below.

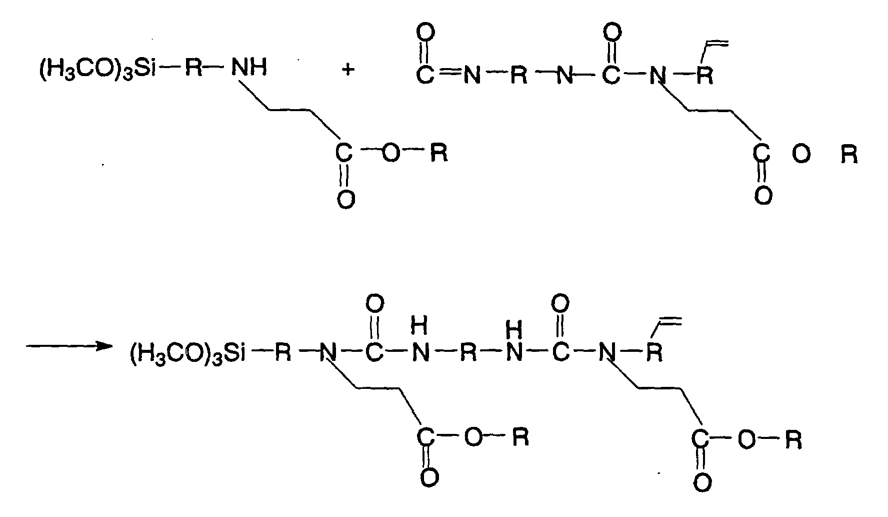

This reaction is carried out at 20 to 50°C for 1 to 200 hours. However, the reaction can be carried out continuously beyond 200 hours without any problems. During the reaction, in some cases, a polymerization inhibitor may be present.

The compound (j-2) is a compound having an unsaturated double bond containing a hydrolyzable silicon group. The compound (j-2) is obtained by reacting a poly(meth)acrylate compound represented by the following general formula (34) or a polyvalent allyl compound with the compound represented by the above general formula (17), (18), (19), (20), (21), (22), (23) or (24). 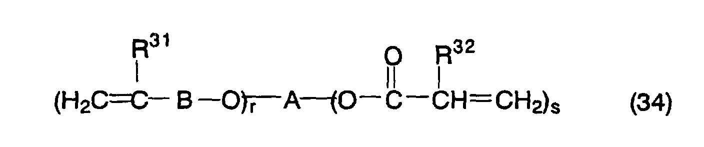 wherein A represents a residue of a (meth)acryl or allyl compound having a group represented by the following general formula (35)(a) at one terminal of the molecule and a group represented by the following general formula (35)(b) at the other terminal of the molecule; B represents -CO- or -CH²-; R³¹ represents a hydrogen atom or a methyl group when B is -CO- and represents a hydrogen atom when B is -CH₂-; R³² represents a hydrogen atom or an alkyl, aryl or aralkyl group having 1 to 10 carbon atoms; and r and s each represent an integer of 1 to 3.

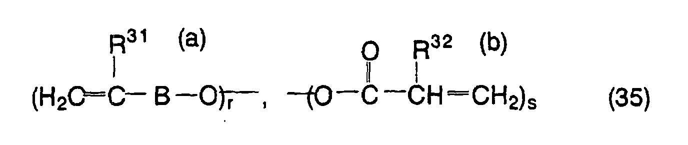

R³¹ and R³² in the general formula (35) are the same as defined above.

Illustrative examples of the poly(meth)acrylate compound represented by the above general formula (34) include polyacrylates or polymethacrylates of polyol compounds such as butanediol, hexanediol, ethylene glycol, propylene glycol, diethylene glycol, triethylene glycol, tripropylene glycol, glycerine, neopentyl glycol, trimethylol propane, pentaerythritol, dipentaerythritol, polyethylene glycol and polypropylene glycol. Specific examples thereof include ethylene glycol di(meth)acrylate, triethylene glycol di(meth)acrylate, neopentyl glycol di(meth)acrylate, trimethylolpropane tri(meth)acrylate, pentaerythritol tri(meth)acrylate, dipentaerythritol hexa(meth)acrylate, and 1,6-hexanediol di(meth)acrylate. Further, EPOXY ESTER 40EM, 70PA, 200PA, 80MF, 3002M and 30002A of KYOEI CO., LTD. and the like which are commercially available as adducts of polyglycidyl ethers of the above polyol compounds with (meth)acrylic acid can also be used.

The polyvalent allyl compound is a compound having a (meth)acryloyl group at one terminal and an allyl group at least one of the other terminals, while the above poly(meth)acrylate compound has a (meth)acryloyl group at at least two terminals. Illustrative examples of the compound include compounds obtained by substituting a (meth)acryloyl group at one terminal of the above specific examples of the poly(meth)acrylate compounds with an allyl group.

The reaction between the poly(meth)acrylate compound represented by the above general formula (34) or the polyvalent allyl compound and the compound represented by the above general formula (17), (18), (19), (20), (21), (22), (23) or (24) is carried out at 20 to 100°C for 1 to 200 hours. However, the reaction can be carried out continuously beyond 200 hours without any problems. During the reaction, in some cases, a polymerization inhibitor may be present. An example of the reaction formulae thereof (Michael addition reaction and production of a nitrogen or sulfur atom derived from the Michael addition reaction) is shown below.

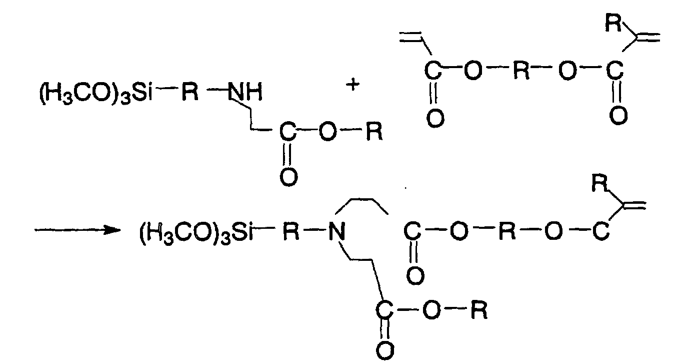

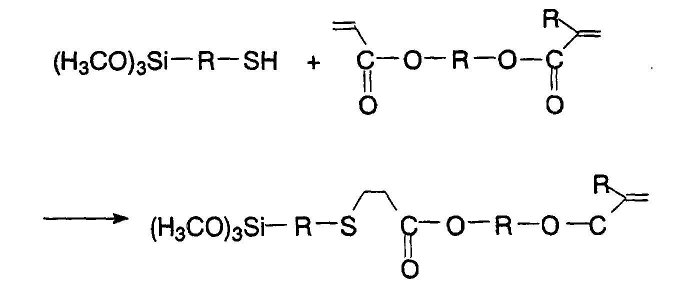

The curable resin composition of the present invention preferably contains a vinyl polymer (D). The vinyl polymer (D) can be produced by (co)polymerizing one or two or more of the above compounds (e) and (j) which are polymerizable vinyl monomers. To (co)polymerize the polymerizable vinyl monomer(s), any known process which is generally carried out in (co)polymerization of a polymerizable vinyl monomer(s) such as a (meth)acrylate compound, such as radical polymerization, anionic polymerization or cationic polymerization can be employed. Particularly, a radical polymerization process which is carried out in the presence of a peroxide polymerization initiator is suitable. Illustrative examples of the initiator for the radical polymerization include azo compounds such as 2,2'-azobisisobutylonitrile, 2,2'-azobis(2-methylbutylonitrile), 2,2'-azobis(2,4-dimethylvaleronitrile), 2,2'-azobis(2-methyl-4-trimethoxysilylpentonyl), 2,2'-azobis(2-methyl-4-methyldimethoxysilylpentonyl), VA-046B, VA-037, VA-061, VA-085, VA-086, VA-096, VA-65 and VAm-110 of Wako Pure Chemical Industries, Ltd., benzoyl peroxide, t-alkyl peroxy ester, acetyl peroxide, and diisopropyl peroxycarbonate. The polymerization may be carried out in the presence of a chain transfer agent. Illustrative examples of the chain transfer agent include lauryl mercaptan, γ-mercaptopropyltrimethoxysilane, γ-mercaptopropylmethyldimethoxysilane, thio-β-naphthol, thiophenol, n-butyl mercaptan, ethyl thioglycolate, isopropyl mercaptan, t-butyl mercaptan, and γ-trimethoxysilylpropyl disulfide. The polymerization reaction is preferably carried out at 20 to 200°C, particularly at 50 to 150°C, for several hours to several tens of hours. Further, the polymerization can also be carried out in the presence of a solvent such as xylene, toluene, acetone, methyl ethyl ketone, ethyl acetate and butyl acetate.

The (co)polymerization of the above polymerizable vinyl monomer(s) is desirably carried out in the above sililated urethane resin (A) in particular, since the effect of the present invention is further increased. The amount of vinyl polymer (D) is desirably 5 to 500 parts by weight based on 100 parts by weight of the sililated urethane resin (A).

When a modified silicone resin (E) is further contained in the curable resin composition of the present invention, the viscosity of the composition can be decreased. Thereby, the workability of the composition can be improved.

The modified silicone resin (E) is an oxyalkylene-based polymer having a reactive silicon group represented by the following general formula (36) in the molecule. 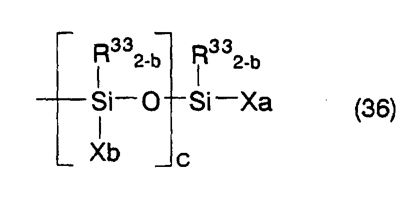 wherein X is the same as defined above; R³³ is a monovalent hydrocarbon having 1 to 20 carbon atoms or a group represented by the formula (R")₃-SiO- (wherein three R"s each are a monovalent hydrocarbon having 1 to 20 carbon atoms and may be the same or different); a represents 0, 1, 2 or 3; b represents 0, 1 or 2; c represents an integer of 1 to 19; and when a plurality of Xs and R³³s are present, they may be the same or different.

The oxyalkylene-based polymer is a (co)polymer whose principal chain is formed by a recurring unit comprising an oxyalkylene group. Illustrative examples of the oxyalkylene group include -CH₂O-, -CH₂CH₂O-, -CH(CH₃)CH₂O-, -CH(C₂H₅)CH₂O-, -CH₂CH₂CH₂CH₂O- and -C(CH₃)₂CH₂O-. Of these, -CH(CH₃)CH₂O- is particularly preferred.

Such a modified silicone resin is a known compound described in, for example, Japanese Patent Publication Nos. 36319/1970 and 12154/1971 and Japanese Patent Application Laid-Open Nos. 47825/1991, 72527/1991 and 79627/1991 and widely commercially available. Commercial products thereof are suitably used in the present invention. The amount of modified silicone resin (E) is desirably 5 to 1,000 parts by weight based on 100 parts by weight of the sililated urethane resin (A).

The thus obtained curable resin composition of the present invention is suitable for applications such as an adhesive, a sealant, and paint. To prepare the adhesive, sealant or paint, a filler, a plasticizer, various additives, a dehydrator and the like are added and mixed with the composition according to the target performance.

Illustrative examples of the filler include calcium carbonate, a variety of treated calcium carbonates, fumed silica, clay, talc, and a variety of balloons.

Illustrative examples of the additives include a plasticizer and a dehydrator.

As the above plasticizer, a phthalate such as dioctyl phthalate or dibutyl phthalate, an aliphatic carboxylate such as dioctyl adipate or dibutyl sebacate or the like can be used.

As the above dehydrator, quick lime, orthosilicates, anhydrous sodium sulfate, zeolites, methyl silicate, ethyl silicate, various alkylalkoxysilanes, and various vinylalkoxysilanes can be used.

Illustrative examples of other additives include an antioxidant, a thixotropy imparting agent, an ultraviolet absorber, a pigment, various tackifiers, a silane coupling agent, a titanate coupling agent, an aluminum coupling agent, and epoxy resins such as a bisphenol-A-type epoxy resin and a bisphenol-F-type epoxy resin. As the silane coupling agent, aminosilane is particularly preferred.

Hereinafter, the present invention will be described in more detail with reference to Examples.

### (Synthesis Example 1)

(i) 184 g of 2-ethylhexyl acrylate and 163.3 g of KBM902 (trade name, product of SHIN ETSU CHEMICAL CO., LTD., γ-aminopropylmethyldimethoxysilane) were reacted with each other at 23°C for 7 days under agitation in a nitrogen atmosphere to obtain a reaction product (1-1). Similarly, 184 g of 2-ethylhexyl acrylate and 221.4 g of KBE903 (trade name, product of SHIN ETSU CHEMICAL CO., LTD., γ-aminopropyltriethoxysilane) were reacted with each other at 23°C for 7 days under agitation in a nitrogen atmosphere so as to obtain a reaction product (1-2).
(ii) 5,000 g of polyoxypropylene diol having a number average molecular weight of 10,000 (product of ASAHI GLASS CO., LTD., trade name: PML-4010) and 168.2 g of hexamethylene diisocyanate (product of SUMITOMO BAYER URETHANE CO., LTD., trade name: SUMIDULE H-s) were reacted with each other at 90°C for 10 hours under agitation in a nitrogen atmosphere so as to obtain an urethane prepolymer (1).
(iii) 1,000 g of the urethane prepolymer (1), 7.4 g of the reaction product (1-1), 69 g of the reaction product (1-2) and 19.8 g of KBM573 (trade name, product of SHIN ETSU CHEMICAL CO., LTD., N-phenyl-γ-aminopropyltrimethoxysilane) were reacted with one another at 90°C for 2 hours under agitation in a nitrogen atmosphere so as to obtain a liquid sililated urethane resin (1) having all isocyanate (NCO) groups sililated.

### (Synthesis Example 2)

(i) 179.3 g of KBM903 (trade name, product of SHIN ETSU CHEMICAL CO., LTD., γ-aminopropyltrimethoxysilane) and 144.1 g of dimethyl maleate were reacted with each other at 40°C for 3 days under agitation in a nitrogen atmosphere so as to obtain a reaction product (2-1).
(ii) Under a current of nitrogen, 323.4 g of the reaction product (2-1) was added dropwise to 222 g of isophorone diisocyanate (product of SUMITOMO BAYER URETHANE CO., LTD., trade name: DESMODULE I) at 50°C over 30 minutes, and the resulting mixture was allowed to react at 50°C for 3 days so as to obtain a reaction product (2-2).
(iii) To 545.4 g of the reaction product (2-2), 93 g of LITE ESTER HOA (trade name, KYOEI CO., LTD., 2-hydroxyethyl acrylate) and 30 g of allyl mercaptan were added, and the resulting mixture was allowed to react at 50°C for 10 days so as to obtain a reaction product (2-3).
(iv) 1,000 g of the urethane prepolymer (1), 14.8 g of the reaction product (1-1) and 75.8 g of the reaction product (2-1) were reacted with one another at 90°C for 2 hours under agitation in a nitrogen atmosphere so as to synthesize a liquid urethane resin (2) having all NCO groups sililated.
(v) To 500 g of the urethane resin (2), a mixed solution comprising 150 g of n-butyl acrylate, 2 g of lauryl mercaptan, 10 g of the reaction product (2-3) and 2 g of 2,2-azobisisobutylonitrile (AIBN) was added dropwise at 80°C over 3 hours so as to cause polymerization, thereby obtaining a synthesized product (1).

### (Synthesis Example 3)

(i) 206.4 g of KBM602 (trade name, product of SHIN ETSU CHEMICAL CO., LTD., N-β(aminoethyl)-γ-aminopropylmethyldimethoxysilane), 128.2 g of n-butyl acrylate and 53.1 g of acrylonitrile were reacted with one another at 50°C for 8 days so as to obtain a reaction product (3-1).
(ii) 387.7 g of the reaction product (3-1) and 226 g of NK ESTER A-HD (trade name, product of SHIN NAKAMURA CHEMICAL CO., LTD., 1,6-hexanediol diacrylate) were reacted with each other at 40°C for 10 days so as to obtain a reaction product (3-2).
(iii) 1,600 g of polyoxypropylene diol having a number average molecular weight of 4,000 (trade name: ACTCALL P-28, product of MITSUI TAKEDA CHEMICAL INDUSTRIES, LTD.), 500 g of polyether polyol having a number average molecular weight of 5,000 (trade name: PR-5007, product of ASAHI DENKA CO., LTD.) and 174.2 g of SUMIDULE T-80 (trade name, product of SUMITOMO BAYER URETHANE CO., LTD., tolylene diisocyanate) were reacted with one another at 90°C for 5 hours under agitation in a nitrogen atmosphere so as to obtain an urethane prepolymer (2).
(iv) 1,000 g of the urethane prepolymer (2) and 240.5 g of the reaction product (2-1) were reacted with each other at 90°C for 2 hours under agitation in a nitrogen atmosphere so as to synthesize a liquid urethane resin (3) having all NCO groups sililated.
(v) A synthesized product (2) was obtained in the same manner as in (v) of Synthesis Example 2 except that the urethane resin (3) was used in place of the urethane resin (2) and the reaction product (3-2) was used in place of the reaction product (2-3).

### (Synthesis Example 4)

(i) 1,000 g of the urethane prepolymer (2) and 252.7 g of the reaction product (1-2) were reacted with each other at 90°C for 1 hour under agitation in a nitrogen atmosphere so as to synthesize a liquid urethane resin (4) having all NCO groups sililated.
(ii) A synthesized product (3) was obtained in the same manner as in (v) of Synthesis Example 2 except that the urethane resin (4) was used in place of the urethane resin (2) and KBM503 (trade name, product of SHIN ETSU CHEMICAL CO., LTD., γ-methacryloxypropyltrimethoxysilane) was used in place of the reaction product (2-3).

### (Examples 1 to 8)

The sililated urethane resin (1), the synthesized products (1), (2) and (3), MS POLYMER S-203 (trade name, product of KANEKA CORPORATION, modified silicone resin), NS2300 (trade name, product of SHIRAISHI INDUSTRIAL Co. LTD., calcium carbonate), and MS-700 (trade name, product of MARUO CALCIUM CO.,LTD., treated calcium carbonate) were charged into a planetary mixer in proportions (weight ratio) shown in Table 1, dehydrated by heating and kneaded at 100°C under a reduced pressure, and then cooled to room temperature. Then, KBM903 and KBM403 (trade names, products of SHIN ETSU CHEMICAL CO., LTD., γ-glycidoxypropyltrimethoxysilane), NEO STANN U-700 (trade name, product of NITTO KASEI CO., LTD., poly(dialkylstannoxane) disilicate compound) or NEO STNN U-300 (trade name, product of NITTO KASEI CO., LTD.,reaction product of dibutyltin acetate and ethyl silicate) and HIMOL PM (trade name, product of TOHO CHEMICAL INDUSTRY CO., LTD.) were used in proportions (weight ratio) shown in Table 1 and kneaded into the resulting mixtures so as to obtain curable resin compositions.

### (Comparative Examples 1 to 5)

Curable resin compositions were obtained in the same manner as in Examples 1 to 8 except that in place of NEO STANN U-700 or NEO STANN U-303 (trade name, product of NITTO KASEI CO., LTD., reaction product of dibutyltin acetate and ethyl silicate), NEO STANN U-200 (trade name, product of NITTO KASEI CO., LTD., dibutyltin diacetate), STANN No. 918 (trade name, product of SANKYO ORGANIC CHEMICALS CO., LTD., reaction product of dibutyltin oxide and phthalic diester) or STANN BL (trade name, product of SANKYO ORGANIC CHEMICALS CO., LTD., dibutyltin laurate) was used, and that in place of HIMOL PM, SHELLSOL TK having a boiling point lower than 250°C (trade name, SHELL JAPAN CO., LTD.) or N-methyl-2-pyrrolidone (NMP) was used. Each composition of the curable resin is show in Fig.2.

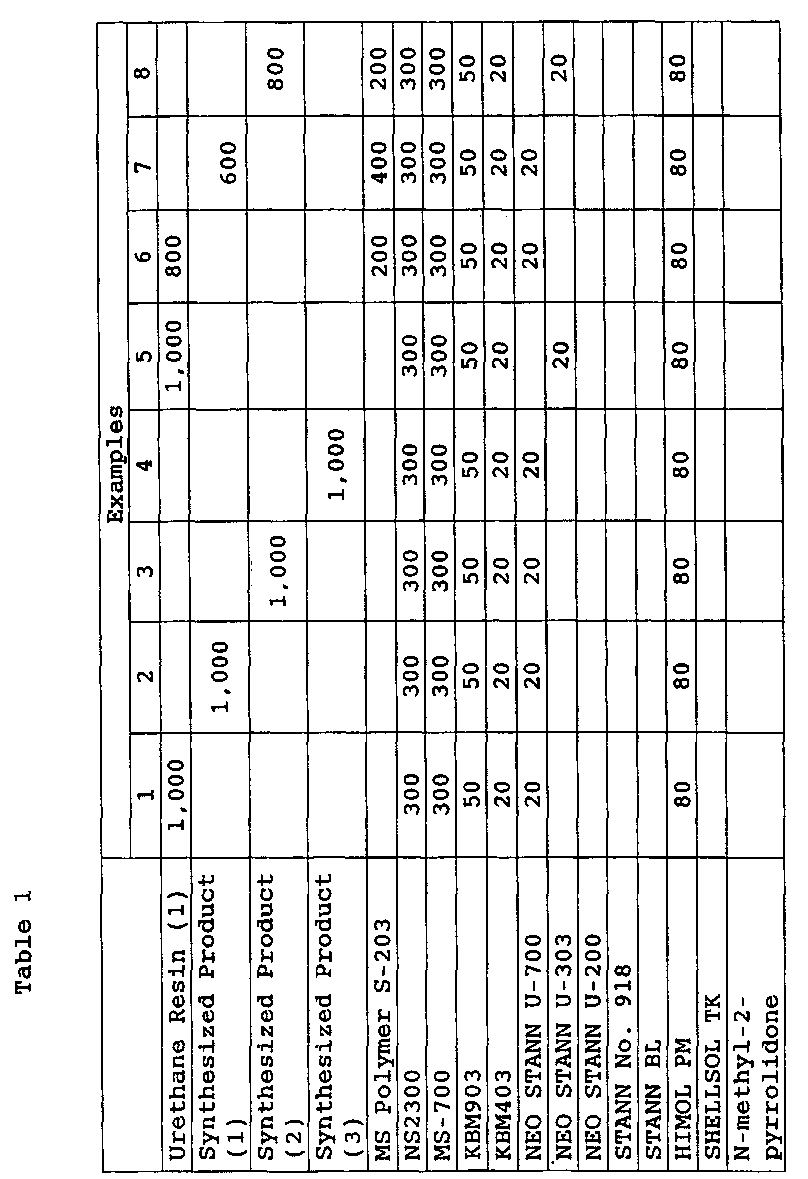

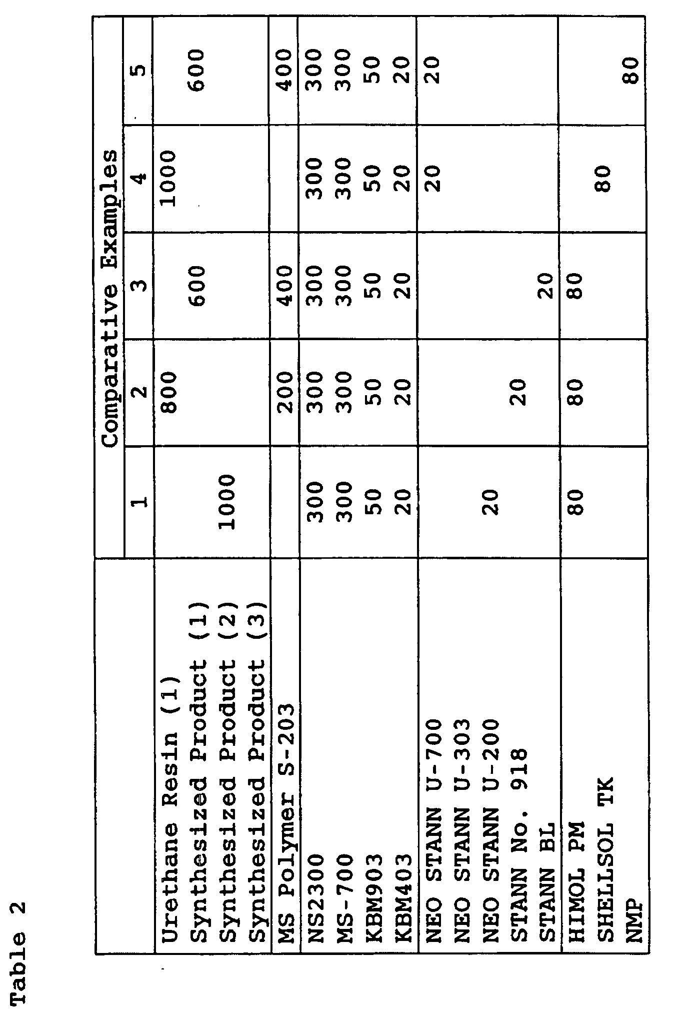

The physical properties of the curable resin compositions obtained in the Examples and Comparative Examples were measured in the following manner. The results are shown in Table 3.

### Tack Free Time

To check the activity of the curing catalyst used, the curable resin composition obtained was left to stand at 23°C and at a relative humidity of 50% right after its preparation so as to measure the time required for the surface to become tack-free.

### Initial Adhesive Strength

0.2 g of the curable resin composition obtained was uniformly applied to one surface (25 mm × 25 mm) of a birch (25 mm × 100 mm) at 23°C and at a relative humidity of 50%. Then, without having open time, an ABS board (25 mm × 25 mm) was immediately laminated onto the coated surface and then cured for a predetermined time. Then, tensile shearing adhesive strength (N/cm²) was measured in accordance with JIS K 6850.

### Environmental Friendliness

The environmental friendliness of the curable resin composition obtained was evaluated based on whether it contained a material having a boiling point lower than 250°C or not (X when it contained the material and ○ when it did not contain the material) or whether there was an obligation to display based on a PRTR law and/or an occupational safety and health law (X when there was an obligation to display and ○ when there was no obligation to display).

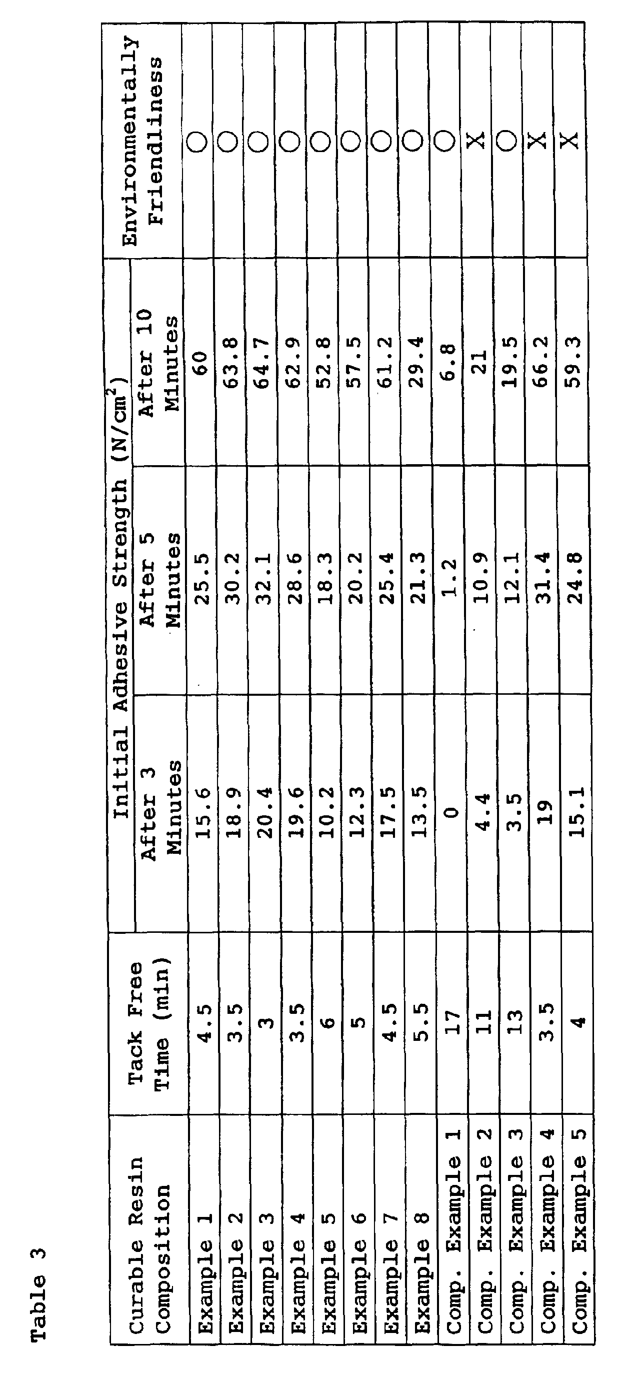

## Claims

1. A curable resin composition comprising:
100 parts by weight of a sililated urethane resin (A) having a polyoxyalkylene polymer as its main chain, having a reactive silicon group at a terminal of the molecule and having a substituted urea bond in the molecule,
1 to 50 parts by weight of a diluent (B) having a boiling point of 250°C or more, and
0.1 to 10 parts by weight of a curing catalyst (C),
wherein the curing catalyst (C) is a reaction product of a poly(dialkylstannoxane) dicarboxylate represented by the following general formula (1): 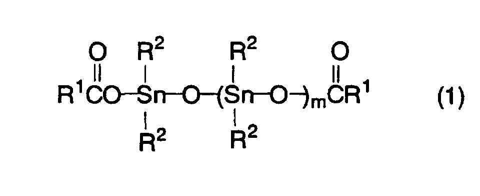 wherein R¹ and R² represent each a substituted or unsubstituted hydrocarbon group having 1 to 12 carbon atoms; m represents 0 or an integer of more than one; and R¹ and R² may be the same or different,
and a silicate compound represented by the following general formula (2):
R³ ₙSi(OR⁴)₄₋ₙ (2)
wherein R³ and R⁴ represent each an alkyl group having 1 to 4 carbon atoms; n represents an integer of 0 to 3; R³ and R⁴ may be the same or different; when a plurality of R³s are present, they may be the same or different; and when a plurality of R⁴s are present, they may be the same or different.

2. A curable resin composition comprising:
100 parts by weight of a sililated urethane resin (A) having a polyoxyalkylene polymer as its main chain, having a reactive silicon group at a terminal of the molecule and having a substituted urea bond in the molecule,
1 to 50 parts by weight of a diluent (B) having a boiling point of 250°C or more, and
0.1 to 10 parts by weight of a curing catalyst (C),
wherein the curing catalyst (C) is a reaction product of a poly(dialkylstannoxane) dicarboxylate represented by the following general formula (1): 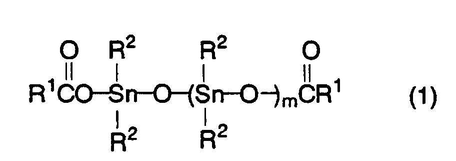 wherein R¹ and R² represent each a substituted or unsubstituted hydrocarbon group having 1 to 12 carbon atoms; m represents an integer of more than one; and R¹ and R² may be the same or different,
and a silicate compound represented by the following general formula (2):
R³ ₙSi(OR⁴)₄₋ₙ (2)
wherein R³ and R⁴ represent each an alkyl group having 1 to 4 carbon atoms; n represents an integer of 0 to 3; R³ and R⁴ may be the same or different; when a plurality of R³s are present, they may be the same or different; and when a plurality of R⁴s are present, they may be the same or different.

3. The composition according to claim 1, wherein the curing catalyst (C) includes a poly(dialkylstannoxane) disilicate compound represented by the following general formula (3): 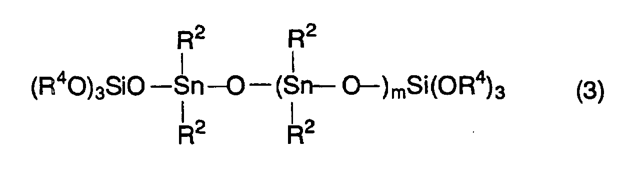 wherein R², R⁴ and m are the same as defined above.

4. The composition according to claim 2, wherein the curing catalyst (C) includes a poly(dialkylstannoxane) disilicate compound represented by the following general formula (3): 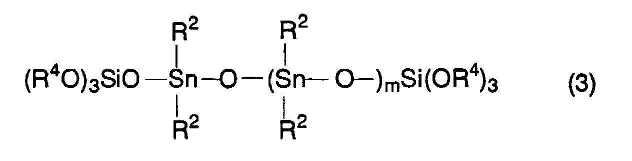 wherein R², R⁴ and m are the same as defined above.

5. The composition according to any one of claims 1-4, which further contains a vinyl polymer (D) obtained by polymerization of a polymerizable vinyl group-containing monomer in an amount of 5 to 500 parts by weight based on 100 parts by weight of the sililated urethane resin (A).

6. The composition according to any one of claims 1 to 5, which further contains a modified silicone resin (E) in an amount of 5 to 1,000 parts by weight based on 100 parts by weight of the sililated urethane resin (A).

7. The composition according to claim 1, 2, 5 or 6, wherein the diluent(B) has a mocular weight of 1,000 or less and has a group selected from the group consisting of a hydroxyl, an allyl, an alkyl and an amino group.
